# EUROPÄISCHE PATENTSCHRIFT

(11) **EP 1 257 347 B1**
(45) Veröffentlichungstag und Bekanntmachung des Hinweises auf die Patenterteilung: **30.11.2005**
(21) Anmeldenummer: 01903711.8
(22) Anmeldetag: 07.02.2001
(51) Int. Cl.: B01D 53/86, B01J 23/78

(54) **KATALYSATOR ZUM ABBAU VON N2O, DESSEN VERWENDUNG SOWIE VERFAHREN ZU SEINER HERSTELLUNG**
CATALYST FOR DECOMPOSING N2O, ITS USE AND METHOD FOR THE PRODUCTION THEREOF
CATALYSEUR DE DEGRADATION DU N2O, SON UTILISATION AINSI QUE SON PROCEDE DE PREPARATION

(30) Priorität: 11.02.2000 DE 10006103
(43) Veröffentlichungstag der Anmeldung: 20.11.2002
(73) Patentinhaber: Uhde GmbH, 44141 Dortmund (DE)
(72) Erfinder: SCHWEFER, Meinhard, 59872 Meschede (DE)
(74) Vertreter: Ackermann, Joachim
(86) Internationale Anmeldenummer: PCT/EP2001/001307
(87) Internationale Veröffentlichungsnummer: WO 2001/058570

(56) Entgegenhaltungen:
- EP-A- 0 362 960
- WO-A-00/13789
- DE-A- 19 700 490

## Beschreibung

Die vorliegende Erfindung betrifft ein Verfahren zum Abbau von N₂O bei der Salpetersäureproduktion, einen Katalysator zum Abbau von N₂O sowie dessen Herstellung.

Bei der Ammoniakoxidation im Verlaufe der Salpetersäureproduktion entsteht neben dem gewünschten Stickstoffmonoxid NO auch das unerwünschte Lachgas N₂O. Dieses trägt in nicht unerheblichem Maße zum Abbau von stratosphärischem Ozon und zum Treibhauseffekt bei. Nach Reduzierung der Lachgasemissionen der Adipinsäureindustrie stellt die Salpetersäureproduktion die größte Quelle industrieller Lachgasemissionen dar. Es besteht daher aus Gründen des Umweltschutzes ein dringender Bedarf an technischen Lösungen, die Lachgasemissionen bei der Salpetersäureproduktion zu reduzieren. Eine Übersicht über den Ablauf der Salpetersäureproduktion und deren verschiedene Verfahrensvarianten ist in Ullmann's Encyclopedia of Industrial Chemistry; Vol. A 17, VCH Weinheim (1991) gegeben.

Eine aussichtsreiche Möglichkeit zur Entfernung von N₂O aus industriellen Abgasen besteht in der Zersetzung von N₂O in die Elemente Stickstoff und Sauerstoff mit Hilfe eines geeigneten Katalysators.

Zur Beseitigung von N₂O bei der HNO₃-Produktion existieren zahlreiche Vorschläge, welche zumeist auf einen katalytischen Abbau des N₂O zwischen den Pt-Netzen und den ersten Wärmetauschern basieren.

So beschreibt US-A-4,973,457 ein Verfahren zur Beseitigung von Distickstoffoxid, welches während der NH₃-Verbrennung gebildet wird, durch Retention der Gase für 0,1 bis 3 Sekunden bevor diese abgekühlt werden. Nach dem hier beschriebenen Verfahren soll bis zu 90% N₂O in N₂ und O₂ zersetzt werden. Alternativ wird angegeben, daß die Gase zur selektiven Zersetzung und zur Verminderung der Retentionszeit auch mit einem Metall-oder Metalloxidkatalysator zusammengebracht werden können.

DE-A-19 805 202 offenbart ein Verfahren zur Herstellung von Salpetersäure, bei dem zur Vermeidung der Freisetzung von Lachgas die Reaktionsgase stromabwärts des Platinnetzes vor der Kühlung über einen temperaturstabilen Katalysator für die Umwandlung des in den Reaktionsgasen enthaltenen N₂O geführt werden. Der Katalysator wird hierbei einer extremen Wärmebelastung von 800 bis 1000°C, wie sie unmittelbar nach dem Austritt der Reaktionsgase aus dem Katalysatornetz vorherrscht, ausgesetzt. Als Katalysatoren werden vorzugsweise Edelmetalle oder Keramik eingesetzt.

In DE-A-19819882 wird ebenfalls ein Verfahren zur katalytischen Zersetzung von N₂O beschrieben, bei dem die Reaktionsgase der Ammoniakverbrennung vor Abkühlung, d.h. vor Kontakt mit einem Wärmetauscher über einen Katalysator geleitet werden, der vorzugsweise aus 8 Gew.% CuO, 30 Gew.% ZnO und 62 Gew.% Al₂O₃ besteht. Die Verweilzeit zur N₂O-Zersetzung ist vorzugsweise <0,1 Sekunden.

US-A-5,478,549 beansprucht ein Verfahren zur Herstellung von NO durch Oxidation von Ammoniak an Katalysatoren von Platingruppenmetallen, bei dem das unerwünscht entstehende N₂O zusammen mit dem Reaktionsgas zunächst über ein Fängersystem zur Rückgewinnung von flüchtigen Platingruppenmetallen geführt wird, und dann zur Zersetzung des N₂O über ein Katalysatorbett aus Zirkoniumoxid geleitet wird. Die Temperatur des Bettes soll ≥600°C betragen.

Eine Anordnung direkt hinter den Pt-Netzen erscheint deshalb als besonders erstrebenswert, da nur die den Pt-Netzen nachgeschaltete Schüttung von Raschigringen gegen eine entsprechende Katalysatorschüttung ausgetauscht oder eine einfache Vorrichtung zur Aufnahme des Katalysators unterhalb der Netze installiert werden müßte. Von Nachteil sind allerdings die extremen Bedingungen. Bei Temperaturen um 900°C, Wassergehalten im Bereich von 17% und NO-Gehalten von 10% werden nicht nur hohe Anforderungen an die Aktivität und Selektivität des Katalysators gestellt, sondern auch an dessen mechanische und thermische Beständigkeit. Ferner kann sich der Pt-Abbrand der Pt-Netze auf der Katalysatorschüttung niederschlagen und zu einer verminderten Selektivität des N₂O-Abbaus führen, in dem auch das gewünschte Oxidationsprodukt NO zersetzt wird (Boudart et al., Journal of Catalysis 39, (1975), 383-394).

Bei einer Anordnung entsprechender Katalysatoren im Restgas, welches den Absorptionsturm mit einer Temperatur von 20-30°C verläßt, ist der Wassergehalt je nach Verfahrensvariante auf ca. 0,2 - 2 % begrenzt, der NOₓ-Gehalt beträgt ca. 200 - 1000 ppm. Die maximale Temperatur zum Betrieb dieses Katalysators ist durch die jeweilige Eingangstemperatur der Restgasturbine vorgegeben, was die Auswahl geeigneter Katalysatoren einschränkt.

Unter den zahlreichen Katalysatoren, deren prinzipielle Eignung zur Zersetzung und Reduktion von Lachgas nachgewiesen wurde (Kapteijn et al.; Appl. Cat. B: Environmental 9 (1996), 25-64), sind u.a. Übergangsmetall-beladene Zeolith-Katalysatoren zu nennen (US-A-5, 171, 553), deren potentielle Anwendbarkeit zur N₂O-Minderung bei der Salpetersäureproduktion auch von Kapteijn erwähnt wird.

Im Falle von eisenhaltigen Zeolithen, z.B. Fe-ZSM-5, wird deren Aktivät zum Abbau von N₂O in Gegenwart entsprechender Mengen NO erhöht, was auf eine Reaktion unter Bildung von NO₂ gemäß NO + N₂O ---> N₂ + NO₂ zurückgeführt wird, welche von Fe-ZSM-5 katalysiert wird (Kapteijn et al., Journal of Catalysis 167 (1997), 256-265).

Entsprechend dieser Vorstellung wird auf den möglichen Einsatz dieser Katalysatoren zur Beseitigung von N₂O aus dem Restgas einer Salpetersäureproduktion hingewiesen, welches zu in etwa gleichen Teilen NO und N₂O enthält. Der praktische Einsatz derartiger eisenhaltiger und kupferhaltiger Zeolithe dürfte allerdings problematisch sein, da hier ausdrücklich auf deren Desaktivierung unter hydrothermalen Bedingungen hingewiesen wird.

Eisenhaltige Zeolithe basierend auf Ferrierit zur Reduktion von N₂O-haltigen Gasen sind auch Gegenstand von WO 99/34901. Die hier eingesetzten Katalysatoren enthalten 80-90% Ferrierit sowie weitere bindende Anteile. Der Wasseranteil der zu reduzierenden Gase liegt im Bereich von 0,5 bis 5 Vol%. Bei einem Vergleich verschiedener Zeolith-Typen wurden mit Zeolithen vom FER (Ferrierit)-Typ beim Abbau von N₂O die besten Ergebnisse erzielt (77% N₂O-Abbau bei 400°C in Gegenwart von 1000 ppm NO und und 3% H₂O).

Die Gegenwart von NOₓ beschleunigt hierbei den N₂O-Abbau, so daß ein solcher Katalysator zur Erzielung hoher Abbauraten an N₂O zweckmäßigerweise im Restgas der Salpetersäureproduktion vor einer etwaigen DeNOx-Stufe, welche den NOx-Gehalt des Abgases reduziert, angeordnet wird. DeNOx-Stufen in Salpetersäureanlagen aber werden bevorzugt nach dem SCR-Verfahren (Selective Catalytic Reduktion) mit entsprechenden Katalysatoren und NH₃ als Reduktionsmittel bei Temperaturen von im Bereich von 250 bis 350°C betrieben. Das Vorschalten eines Katalysators zum N₂O-Abbau, welcher bei einer Temperatur von ca. 400°C arbeitet, ist damit aber aus ökonomischer Sicht wenig sinnvoll, da das Abgas, welches beim Verlassen der Absorbers eine Temperatur von ca. 30°C aufweist zunächst auf ca. 400°C aufgeheizt und anschließend auf ca. 300°C abgekühlt werden müßte.

Katalysatoren zum Abbau von N₂O, welche keiner Aktivierung durch NO bedürfen, erscheinen deshalb zum Einsatz im Abgas der Salpetersäureproduktion als bevorzugt.

Derartige Materialien sind beispielsweise binäre Oxide wie Co₃O₄ oder NiO, deren hohe Aktivität zur N₂O-Zersetzung von Saito et al. in Actes du 2ième Congrès International sur la Catalyse, Technip, Paris 1961, 1937-1953 herausgestellt wird.

Danach wird ein vollständiger N₂O-Abbau über Co₃O₄ schon bei ca. 360°C erreicht. Von Nachteil ist jedoch der hohe Preis dieser Materialien.

In Actes du 2ième Congres International sur la Catalyse, Technip, Paris 1961, 1937-1953 sind weitere binäre Oxide, wie z.B. Al₂O₃ oder MgO und deren Eignung zur Zersetzung von N₂O beschrieben.

Diese im Vergleich zu Co₃O₄ kostengünstigen Oxide besitzen jedoch nur eine schlechte Aktivität zur N₂O Zersetzung. So wird ein vollständiger N₂O-Abbau über MgO erst bei ca. 730°C erreicht.

Auch das Einbringen spezieller Co-Verbindungen in entsprechende, kostengünstige Matrizes bzw. die Trägerung auf verschiedenen Supportmaterialien ist in der Literatur beschrieben. Die erreichten Aktiväten sind jedoch deutlich niedriger als die der reinen Co-Komponenten.

So steigt beim Einbringen des in Adv. Sci. Technol. (Faenza, Italy) (1999) 16, 585-592 beschriebenen LaCoO₃ in eine keramische Matrix (mit 30% Gewichtsanteil an LaCoO3) die für einen vollständigen Abbau von N₂O notwendige Temperatur von 420°C auf ca. 650°C.

DE-A-19700490 beansprucht einen Katalysator zur Zersetzung von Lachgas, der aus einem Gemisch von Co₃O₄ und La₁₋ₓCuₓCoO_{3-δ} besteht und mit dem in reiner Form ein vollständiger N₂O-Abbau (ausgehend von 2000 ppm N₂O in synthetischer Luft) bereits bei ca. 300°C erreicht wird. Das Einbringen dieser Aktivkomponente in eine nicht näher benannte keramische Matrix mit 25%igen Massenanteil der Aktivkomponente verschiebt jedoch die Umsatztemperatur für den vollständigen N₂O-Abbau auf ca. 600°C.

Ein Verfahren zur Zersetzung von Stickoxiden basierend auf Katalysatoren, welche Mischoxide aus MgO und CoO, d.h. feste Lösungen von CoO in MgO (z.B. mit einem stöchiometrischen Verhältnis von CoO/5MgO) enthalten oder die CoO aufgebracht auf einen Träger aus MgO (z.B. MgO +10% CoO) enthalten, wird in US-A-5,705,136 beschrieben. Durch die Art der Herstellung werden die Kobaltatome hier so auf dem MgO Träger fixiert bzw. in diesen incorporiert, das Kobalt hier nahezu ausschließlich in zweiwertigem Zustand vorliegt, was in US-A-5,705,136 und in Appl. Catal. B: Environmental 13 (1997) 69-79 ausdrücklich erwähnt und belegt wird. Der bevorzugte Einsatzbereich dieser Katalysatoren liegt zwischen 500 und 700°C.

In der EP-A-362,960 wird ein Katalysator für die Entstickung beschrieben, der mindestens drei Komponenten aufweist. Eine dieser Komponenten ist ein Edelmetall oder ein Edelmetalloxid.

Aus der älteren, nicht vorveröffentlichten WO-A-00/13,789 ist ein keramischer Katalysator bekannt, der sich zur selektiven Zersetzung von N₂O eignet und der im Bereich hoher Temperaturen von 700 bis 1000°C in nitrosen Gasen eingesetzt wird.

Im Hinblick auf den bekannten Stand der Technik ergibt sich somit die Aufgabe, für die HNO₃-Produktion ein Verfahren zur N₂O-Minderung zur Verfügung zu stellen, daß einen hohen Abbau an N₂O bei niedrigen Temperaturen ermöglicht und ohne verfahrenstechnische Nachteile für den HNO₃-Prozeß in diesen integriert werden kann. Dies gilt nicht nur für den notwendigen apparativen Aufwand, der mit der Installation eines solchen N₂O-Minderungsverfahren verbunden ist, sondern insbesondere auch für etwaige Beeinträchtigungen der HNO₃-Produktion, sei es im Volllastbetrieb oder beim Anfahren oder Abfahren der Produktion.
Diese Aufgabe wird gelöst durch die vorliegende Erfindung und betrifft ein Verfahren zum Abbau von N₂O bei der Salpetersäureproduktion durch Kontaktieren des den Absorbtionsturm verlassenden N₂O-haltigen Abgases mit einem Katalysator, der mindestens eine oxidische Kobaltverbindung und mindestens eine oxidische Magnesiumverbindung enthält unter solchen Bedingungen, die eine Umwandlung von N₂O zu gasförmigen Stickstoff und Sauerstoff erlauben, wobei der Gehalt an oxidischen Kobaltverbindungen im Bereich von 0,1 bis 50 Gew.%, und der Gehalt an oxidischen Magnesiumverbindungen im Bereich von 50 bis 99,9 Gew.%, jeweils bezogen auf die Gesamtmasse des Katalysators, liegt.
Weiterhin betrifft die vorliegende Erfindung einen Katalysator zum Abbau von N₂O, bestehend im wesentlichen aus mindestens einer oxidischen Magnesiumverbindung und mindestens einer oxidischen Kobaltverbindung. Der Gehalt an oxidischen Kobaltverbindungen liegt im Bereich von 0,1 bis 50 Gew.%, vorzugsweise 5 bis 35 Gew.%, und der Gehalt an oxidischen Magnesiumverbindungen im Bereich von 50 bis 99,9 Gew.%, vorzugsweise 65 bis 95 Gew.%, jeweils bezogen auf die Gesamtmasse des Katalysators. Der Katalysator besitzt vorzugsweise eine Raumdichte im Bereich von 0,5 bis 2,5 g/cm³ bezogen auf den einzelnen Katalysatorkörper.

Bei dem erfindungsgemäßen Katalysator handelt es sich um einen Vollkatalysator ("bulk catalyst").

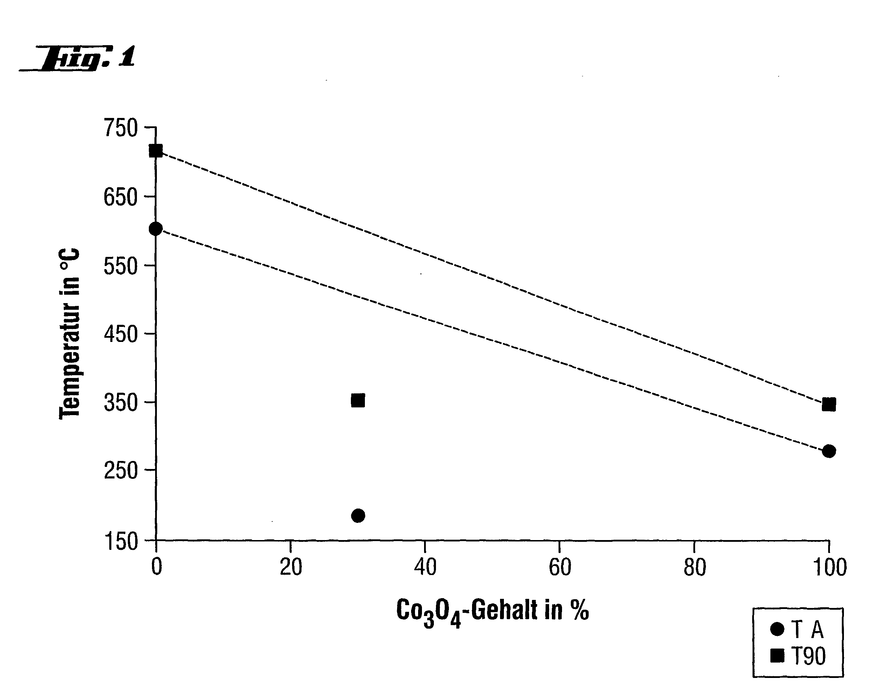

Der erfindungsgemäße Katalysator enthält Kobaltverbindungen bei denen mindestens 30 %, vorzugsweise mehr als 50 % der Co-Atome in chemisch III-wertigem Zustand vorliegen. Die und oxidischen Verbindungen von Kobalt und Magnesium liegen dabei weitestgehend in getrennten Phasen vor, was durch entsprechende Röntgenbeugungsexperimente (XRD) nachweisbar ist. Der Oxidationszustand des Kobalt kann mit Hilfe von Photoelektronenspektroskopie (XPS) erkannt werden.
Vorzugsweise besitzt die oxidische Kobaltverbindung oder bei Vorliegen mehrerer oxischer Kobaltverbindungen mindestens eine von diesen Perowskit-oder Spinellstruktur. Beispiele für erfindungsgemäß verwendbare Kobaltverbindungen sind Co₃O₄ oder LaCoO₃. Auch die Verwendung entsprechend dotierter Verbindungen wie z.B. CuₓCo₃₋ₓO₄ oder La₁₋ₓSrₓCoO₃ ist im Sinne der Erfindung. Als Magnesiumverbindung wird vorzugsweise MgO verwendet.
Die wesentlichen Katalysatorskomponenten, d.h. die oxidischen Verbindungen von Magnesium und von III-wertigem Kobalt sollten eine möglichst hohe spezifische Oberfläche aufweisen, um eine möglichst hohe Aktivtät des Katalysators zu erreichen. Die spezifische Oberfläche der oxidischen Kobaltverbindungen liegt dabei je nach Art und Herstellung typischerweise im Bereich von 3 bis 30 m²/g, die der oxidischen Mg-Verbindung im Bereich von 20 bis 200 m²/g. Die spezifische Oberfläche des fertigen Katalysators liegt vorzugsweise im Bereich von 5 bis 150 m²/g.
Als zylindrischer Formkörper vorliegend besitzt der Katalysator vorzugsweise eine radiale Druckfestigkeit im Bereich von 0,5 bis 10 MPa.
Die erfindungsgemäßen Komposit-Katalysatoren zeichnen sich durch eine herausragende Aktivität zur Zersetzung von N₂O, die sogar größer als die Aktivität der reinen Kobalt-Verbindung ist, aus. Dies wird in Abbildung 1 verdeutlicht.
Aufgetragen ist T₉₀, d.h. die für einen 90%igen Abbau von N₂O notwendige Temperatur, sowie die Anspringtemperatur (T_{A}) des N₂O-Abbaus gegen den auf das Katalysatorgewicht bezogenen Gehalt an Co₃O₄. Zum Vergleich sind die entsprechenden Werte für den N₂O-Abbau über reinem Co₃O₄ und reinem MgO mit aufgeführt (Actes du 2ième Congrès International sur la Catalyse, Technip, Paris 1961, 1937-1953).

Die genauen Herstellungs- und Meßbedingungen sind dem aufgeführten Beispiel zu entnehmen.

Wie deutlich zu erkennen, besteht für oxidische Verbindungen von III-wertigen Kobalt und MgO ein synergetischer Effekt bezüglich der N₂O-Zersetzung. Statt des erwarteten proportionalen, d.h. linearen Verlaufs der Kurven (gestrichelte Linien) von T₉₀ = 715°C für reines MgO (entsprechend 0 Vol.% Co₃O₄) hin zu T₉₀ = 350°C für reines Co₃O₄, bzw. von T_{A} = 605°C für reines MgO hin zu T_{A} = 280°C für reines Co₃O₄, beträgt der T₉₀-Wert des erfindungsgemäßen Katalysators bei 30 % Co₃O₄ nur 355°C, die Anspringtemperatur des erfindungsgemäßen Katalysators ist mit T_{A}= 185°C sogar deutlich niedriger, als die des reinen Co₃O₄.

Ein solcher Effekt wird nicht für feste Lösungen von von II-wertigem Kobaltoxid (CoO) in MgO beobachtet, ebenso nicht bei Verwendung von MgO als Trägermaterial. Die für den N₂O Abbau benötigten Temperaturen sind deutlich höher als im Fall der erfindungsgemäßen Komposit-Katalysatoren.

Diese hohe Aktivtät des Katalysators, die einen N₂O-Abbau von > 80 % ermöglicht, und seine minimierte Wasserempfindlichkeit erlaubt dessen bevorzugten Einsatz zur Beseitigung von Lachgas aus dem Abgas der HNO₃-Produktion. Der Einsatz des erfindungsgemäßen Katalysators ist aber nicht auf die Salpetersäureproduktion beschränkt. Der Katalysator läßt sich überall dort einsetzen, wo der Abbau von Lachgas bei relativ niedrigen Temperaturen aus Ab- oder Prozeßgasen erwünscht ist. Die erfindungsgemäßen Katalysatoren lassen sich beispielsweise auch hinter Gasturbinen einsetzen.

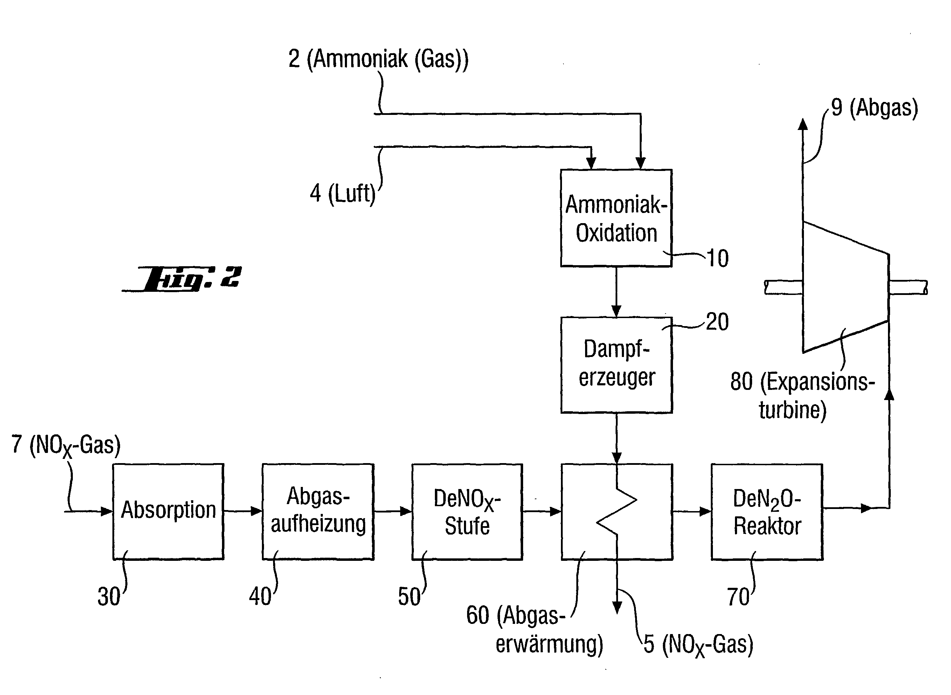

Abbildung 2 veranschaulicht eine besonders vorteilhafte Anordnung beim Abbau von Lachgas in der Salpetersäureproduktion, die deshalb besonders vorteilhaft ist, da das N₂O-haltige Gas bei Drücken von 4 bis 12 bara über den Katalysator geleitet wird, was die benötigte Menge an Katalysator reduziert, und zum andern die zum Einstellen der gewünschten Betriebstemperatur im Reaktor benötigte Wärmeenergie in der anschließenden Expansionsturbine zurückgewonnen werden kann.

Das den Absorptionsturm (30) der HNO₃-Produktion verlassende Abgas wird über den erfindungsgemäßen Katalysator geleitet, welcher in einem Reaktor (DeN₂O-Reaktor) (70) in Prozeßrichtung vor der Expansionsturbine (80) angeordnet ist, insbesondere vor der Expansionsturbine (80) und hinter einer DeNOx-Stufe (50).

Ist im Abgasstrom bereits eine DeNOx-Stufe zur Minderung des NOx-Gehaltes installiert, ist der erfindungsgemäße Katalysator dieser Stufe nachzuschalten, da die Anwesenheit von NOx eine inhibierende Wirkung auf den N₂O-Abbau über eben diesem Katalysator hat. Da die DeNOx-Stufe, welche üblicherweise nach dem SCR-Verfahren (Selective Catalytic Reduction) mit NH₃ als Reduktionsmittel bei Temperaturen zwischen 200 und 350 °C betrieben wird, bei niedrigeren Temperaturen arbeitet als zur Beseitigung von N₂O benötigt, ermöglicht die Nachschaltung des Reaktors zur N₂O-Beseitigung ein vom Austritt aus dem Absorber bis zum Eintritt in die Expansionsturbine ansteigendes Temperaturniveau des Abgasstromes. Dies ist aus verfahrenstechnischer Sicht besonders vorteilhaft.

Das Überleiten des N₂O-haltigen Abgasstromes über den Katalysator erfolgt üblicherweise bei Temperaturen im Bereich von 250 bis 650°C, vorzugsweise im Bereich von 300 bis 600°C.

Die Temperatur des Katalysatorbettes ist dabei, sofern sie nicht durch den Gesamtprozeß, bspw. durch den Betrieb der nachgeschalteten Restgasturbine vorgegebenen ist, so gewählt, daß ein mindestens 80%iger, vorzugsweise ein mindestens 90%iger, besonders bevorzugt ein mehr als 95%iger Abbau des N₂O zu N₂ und O₂ erreicht wird.

Die hierzu notwendige Temperatur richtet sich dabei zum einen nach der Zusammensetzung des Abgases, welche je nach Verfahrensvariante der HNO₃-Produktion variieren kann. So haben beispielsweise im Gasstrom enthaltene H₂O-, NOx- oder O₂-Moleküle eine inhibierende Wirkung auf die N₂O-Zersetzung an kobalthaltigen Katalysatoren. Bei hohen Anteilen an diesen Stoffen ist die Temperatur entsprechend anzuheben.

Zum anderen ist die zum N₂O-Abbau benötigte Temperatur abhängig von der gewählten Verweilzeit bzw. Raumgeschwindigkeit, d.h. von dem, pro Zeiteinheit und pro Volumeneinheit Katalysator, über diesen geführten Volumenstrom des N₂O enthaltenden Gases. Wie dem Fachmann bekannt, bedingt eine Erhöhung der Katalysatorbelastung bei angestrebt konstanten N₂O-Abbau eine entsprechende Erhöhung der Temperatur. Eine Erhöhung des Druckes, weicher im Bereich von 4 bis 12 bara liegt, verlängert bei gleichbleibendem Katalysatorvolumen die Verweilzeit im Katalysatorbett. Bevorzugte Raumgeschwindigkeiten liegen im Bereich von 2.000 bis 200.000 h⁻¹, insbesondere im Bereich von 5.000 bis 100.000 h⁻¹.

Zum Einstellen der Betriebstemperatur des DeN₂O-Reaktors wird erfindungsgemäß die Reaktionswärme der NH₃-Oxidation genutzt und zwar durch Wärmetausch des in den DeN₂O-Reaktor eintretenden Abgasstroms mit den heißen Prozeßgasen der NH₃-Oxidation, wie in Abbildung 2 verdeutlicht wird. Dies ist von besonderem Vorteil, da so zum Betrieb des DeN₂O-Reaktors keine zusätzliche Wärme, sei es in Form von Dampf oder elektrischer Heizleistung in den HNO₃-Prozeß importiert werden muß.

Auch beim Anfahren und Abfahren der HNO₃-Produktion zeigen sich die Vorteile des erfindungsgemäßen Katalysators .

Seine minimierte Wasserempfindlichkeit ermöglicht nicht nur den langzeitstabilen Abbau von N₂O auch aus H₂O-haltigen Abgasen bei Betriebstemperatur, d.h. bei Temperaturen zwischen 250-650°C, sondern gestattet es außerdem den Katalysator auch bei niedrigen Temperaturen, weit unterhalb der Betriebstemperaturen mit wasserhaltigem Abgas zu beaufschlagen, wie dies beim An- und Abfahren der HNO₃-Produktion der Fall ist, ohne das dieser hierdurch desaktiviert.

Hierbei wird der Betriebsdruck der Anlage langsam aufgebaut bzw. abgebaut, ohne daß jedoch Ammoniak eingespeist und oxidiert wird. Es fehlt folglich die Reaktionswärme zur Beheizung des DeN₂O-Reaktors.

Das erfindungsgemäße Verfahren ermöglicht somit eine effiziente N₂O-Minderung in der HNO₃-Produktion, ohne daß besondere, durch die N₂O-Minderung bedingte Vorkehrungen oder Maßnahmen, wie z.B das Vorheizen auf Betriebstemperatur oder das Spülen mit trockener Luft beim Anfahren oder Abfahren der Produktion zu treffen sind.

Die vorliegende Erfindung betrifft weiterhin ein Verfahren zur Herstellung des vorstehend beschriebenen Katalysators der im wesentlichen aus mindestens einer oxidischen Kobaltverbindung und mindestens einer oxidischen Magnesiumverbindung besteht, zum Abbau von N₂O in N₂O-haltigen Gasen, dadurch gekennzeichnet daß die Herstellung des Katalysators ein trockenes Vermengen der oxidischen Kobaltverbindung und der oxidischen Magnesiumverbindung oder entsprechender Precusoren, die durch Temperung in die oxidischen Verbindungen übergehen, und ein Verdichten des rieselfähigen Gemenges unter Ausschluß von Wasser einschließt, so daß der resultierende Katalysator die gewünschte Raumdichte, vorzugsweise eine Raumdichte im Bereich von 0,5 bis 2,5 g/cm³, insbesondere 1 bis 2 g/cm³, bezogen auf den einzelnen Katalysatorkörper, aufweist.

Die erfindungsgemäße Art der Herstellung der Katalysatoren im großtechnischen Maßstab, insbesondere das Vermengen der Komponenten sowie das Verdichten bzw. die Formgebung des Gemenges, gewährleistet dabei die dauerhafte Aktivität zur N₂O-Zersetzung auch im wasserhaltigem Abgas der Salpetersäureproduktion, was insbesondere beim Anfahren und Abfahren der Produktion von Bedeutung ist.

Zur Herstellung des erfindungsgemäßen Katalysators werden Kobaltverbindungen eingesetzt, bei denen mindestens 30 %, vorzugsweise mehr als 50 % der Co-Atome in chemisch III-wertigem Zustand vorliegen oder aber solche Verbindungen, die im Zuge der Herstellung und/oder des Einsatzes des Katalysators, z.B. durch Temperung in sauerstoffhaltiger Atmosphäre, in Kobaltverbindungen übergehen, die dann einen eben solchen Anteil an III-wertigem Kobalt aufweisen.

Die Herstellung der Co- und Mg-Komponte erfolgt durch spezielle Darstellungsverfahren, die dem Fachmann bekannt sind (vgl. etwa G. Ertl, H. Knözinger J. Weitkamp: Handbook of Heterogeneous Catalysis, Vol. 1, Chap. 2, VCH Weinheim (1997)). Dies sind typischerweise Fällungsmethoden ausgehend von Co- oder Mg-Ionen enthaltenden Salzlösungen, aus welchem eine Fällung durch Zugabe basischer Fällungsreagenzien erfolgt. Aber auch die Herstellung über Festkörperreaktion oder die einfache Zersetzung entsprechender Precusoren ist im Sinne der Erfindung, ebenso eine Herstellung über Flammenhydrolyse bzw. -pyrolyse.

Auch müssen zur Herstellung der Katalysatoren die Ausgangskomponenten nicht in oxidischer Form verarbeitet werden. So können auch entsprechende Precusoren von, wie z.B. Carbonate, Hydroxide, Oxidhydrate, Nitrate oder Acetate von Mg oder Co direkt verarbeitet werden. Die hergestellten Formkörper werden dann in einem abschließenden Temperschritt, bei Temperaturen im Bereich von 200 bis 700°C, vorzugsweise 400 bis 600°C, getempert und so in den oxidischen Zustand überführt.

Zur Erzielung der beschriebenen Eigenschaften ist bei der Herstellung des Katalysators in jedem Fall darauf zu achten, daß die Komponenten des erfindungsgemäßen Katalysators, d.h. die oxidische Kobaltverbindung einerseits und die oxidische Magnesiumverbindung andererseits getrennt voneinander in verschiedenen chemischen Verbindungen, d.h. Phasen vorliegen. Zur Zersetzung des N₂O müssen die im Komposit enthaltenen Phasen dem N₂O enthaltenden Gasraum zugewandt und zugänglich sein. Die eine Phase darf dabei die andere nicht verdecken oder blockieren, wie dies der Fall ist, wenn eine Aktivkomponente auf einen Träger z.B. von MgO beispielsweise durch Fällung oder Tränkung aufgebracht wird oder durch Einkneten in einen Träger eingebettet würde. Bei dem erfindungsgemäßen Katalysator handelt es sich um einen Vollkatalysator. Die Beteiligung beider Aktivkomponenten (oxidische Cobaltverbindung und oxidische Magnesiumverbindung) ist wesentlich für die Wirksamkeit des Katalysators.

Zur Entfaltung der synergetischen Wirkung der beiden Katalysatorkomponenten und zur Minimierung der Wasserempfindlichkeit der Katalysatoren hat sich die erfindungsgemäße technische Herstellung des Katalysators als besonders vorteilhaft erwiesen.

Dies gilt insbesondere bei Verwendung von MgO als oxidischer Magnesiumverbindung. MgO besitzt, vor allem bei hoher spezifischer Oberfläche, wie sie zu katalytischen Zwecken bevorzugt ist, eine ausgeprägte Neigung zur Hydratation. Die Reaktion von MgO mit H₂O, welche gemäß MgO + H₂O → Mg(OH)₂ auf der MgO-Oberfläche stattfindet, ist nämlich mit einer Volumenzunahme verbunden, die ihrerseits zu einer Blockierung der Katalysatorporen, d.h. Minderung der katalytischen Aktivität bis hin zum mechanischen Zerfall der Katalysatorkörper führen kann. Die Kondensation von Wasser auf der Katalysatoroberfläche, welche in Abhängigkeit der Porosität und Porengrößenverteilung des Katalysators in Folge von Kapillarkondensation schon bei Temperaturen weit oberhalb des Taupunktes der freien Gasphase erfolgen kann, verstärkt diesen Effekt.

Dies ist insbesondere dann der Fall, wenn bei der Herstellung des Katalysators, d.h. beim Vermengen der oxidischen Kobalt-Verbindung und MgO und der anschließenden Verdichtung und Formgebung mit Zusatz von Wasser gearbeitet wurde. In diesem Fall wird das Magnesiumoxid bei der Verarbeitung teilweise gelöst und belegt in feiner Verteilung die Oberfläche der Kobaltkomponente. Die Hydratation dieses dispergierten MgO, welche im Vergleich zum kristallinen, d.h. in einem größeren Atomverband eingebundenen MgO wesentlich erleichtert ist, blockiert die Zugänglichkeit der Co-Komponente und führt daher zu einer erhöhten Wasserempfindlichkeit des Katalysators.

Auf diese Weise hergestellte Katalysatoren bedürfen besonderer Vorsicht und Vorkehrungen bei Anwendung in wasserhaltigen Abgasen.

Eine Herstellung über klassische keramische Aufbereitungs- und Formgebungsverfahren, welche üblicherweise ein Vermischen der Komponenten unter Wasserzusatz und eine anschließende wäßrige Plastifizierung und Formgebung durch Extrusion einschließt und gerade bei der großtechnischen Herstellung von Katalysatoren zur Abgasreinigung breiteste Anwendung findet, führt daher zu Katalysatoren die nur bedingt geeignet sind zum Einsatz bei der Salpetersäureproduktion.

Zur erfindungsgemäßen, insbesondere zur großtechnischen Herstellung des Katalysators werden deshalb die oxidischen Verbindungen von Kobalt und Magnesium in Pulverform trocken vermengt. Die anschließende Verdichtung des Gemenges und Formgebung zu Formkörpern gewünschter Geometrie erfolgt ebenfalls unter Wasserausschluß.

Das Vermengen sowie das Verdichten bzw. die Formgebung des Gemenges erfolgt üblicherweise unter Zusatz entsprechender Hilfsstoffe, beispielsweise Bindern oder Presshilfsmitteln, die dem Fachmann bekannt sind und die bei einer thermischen Belastung des Katalysators, bspw. beim Abbrand der zugesetzten Hilfsstoffe oder beim Einsatz des Katalysators, kein Wasser oder nur soviel Wasser freisetzen, daß hierbei keine Kondensation dieses Wassers im Katalysator stattfindet, wie z.B. Graphit oder Talkum.

Die mit dem erfindungsgemäßen Verfahren hergestellten Katalysatoren besitzen üblicherweise ein Porenvolumen im Bereich von 0,1 bis 0,8 ml/g, vorzugsweise 0,2 bis 0,65 ml/g.

Als Formkörper sind alle Arten üblicher Katalysatorgeometrien denkbar, vorzugsweise zylindrische Formkörper z.B. Hohlzylinder aber auch sternförmige Körper, Trilobes usw., die im Vergleich zu ihrem Volumen eine hohe geometrische Oberfläche zur Verfügung stellen.

Zur trockenen Verdichtung und Formgebung können verschiedene Methoden herangezogen werden, die dem Fachmann bekannt sind. Ein bervorzugtes Verfahren ist das Trockenpressen mit Stempel und Matrize, aber auch eine Kompaktierung, z.B. mit einem Walzen-Kompaktor und anschließendes Brechen und Klassieren des kompaktierten Materials ist im Sinne der Erfindung. Ebenso die trockene Extrusion z.B. über Zahnrad- oder Rollenpressen. Besonders bevorzugt für die industrielle Herstellung ist der Einsatz von automatischen Pressen.

Die benötigten Drücke zur Verdichtung bzw. Formgebung richten sich nach den hierzu eingesetzten Aggregaten, der Art der oxidischen Verbindungen von Kobalt und Magnesium den zugesetzten Hilfsstoffen sowie der gewünschten Verdichtung bzw. Festigkeit der Katalysatorkörper. Bevorzugt im Sinne der Erfindung ist eine solche Verdichtung, daß der fertige Katalysator eine Raumdichte von 0,5 bis 2,5 g/cm³ insbesondere 1 bis 2 g/cm³, bezogen auf den einzelnen Katalysatorkörper aufweist.

Mit dem erfindungsgemäßen Verfahren hergestellte beispielsweise zylindrische Formkörper des Katalysators besitzen üblicherweise eine radiale Druckfestigkeit im Bereich von 0,5 bis 10 MPa.

Sehr hohe Verdichtungen führen zwar üblicherweise zu einer erhöhten Festigkeit der Katalysatorkörper, jedoch erschweren sie die Zugänglichkeit der einzelnen Kompositkomponenten im Katalysatokörper. Der erfindungsgemäße Katalysator muß daher in jedem Fall ausgezeichnet sein durch eine hohe offene Porosität, die die Zugänglichkeit der einzelnen Kompositkomponenten für das N₂O enthaltende Gas sicherstellt. Das Gesamtporenvolumen des Katalysators sollte im Bereich von 0,1 bis 0,8 ml/g, insbesondere im Bereich von 0,20 bis 0,65 ml/g, liegen.

Eingeschlossen im Sinne der Erfindung ist auch eine eventuelle Vorverdichtung der Katalysatorkomponenten, die beispielsweise notwendig ist zur Erzeugung rieselfähiger Pulver zwecks automatisierter Befüllung der Presswerkzeuge. Im Sinne der Erfindung besonders geeignet ist hierzu die getrennte Verschlickerung und Sprühgranulierung einerseits der oxidischen Kobaltverbindungen und andererseits der oxidischen Magnesiumverbindungen bzw. entsprechender Precusoren. Diese kann ebenfalls unter Zusatz entsprechender Hilfsstoffe, wie z.B. Bindern, Plastifikatoren oder Verflüssigern, die dem Fachmann bekannt sind, erfolgen.

Auch die gemeinsame Vorverdichtung der oxidischen Kobaltverbindungen und der oxidischen Magnesiumverbindungen ist im Sinne der Erfindung, wobei in diesem Fall Wasserauschluß gewährleistet sein muß. Eine gemeinsame wässrige Verschlickerung und Granulierung der Ausgangskomponenten, insbesondere bei Verwendung von MgO, ist nicht geeignet zur Herstellung wasserbeständiger Katalysatoren.

Temperschritte, bspw. zum Abbrand der zugesetzten Hilfsstoffe oder zur Überführung der als Precursoren verarbeiteten Kobalt- und Magnesiumverbindungen in die entsprechneden Oxide sind ebenfalls Bestandteil der erfindungsgemäßen Herstellung der Katalysatoren. Bevorzugt erfolgt eine Temperung als abschließender Schritt der Katalysatorherstellung nach der Formgebung bei Temperaturen im Bereich von 200 bis 700°C, vorzugsweise im Bereich von 400 bis 600°C.

Die Temperaturwahl eines möglichen Temperschrittes hat so zu erfolgen, daß die Katalysatoraktivität bei der späteren Betriebstemperatur dadurch nicht oder nicht wesentlich beenträchtigt wird. Im allgemeinen ist bei der Temperaturwahl darauf zu achten, daß im trocken gepreßten Material praktisch keine Sintervorgänge ablaufen, die zu einer Keramisierung des Trockenpresslings führen.

Die Erfindung wird anhand der nachfolgenden Beispiele verdeutlicht.

### Beispiele:

### Herstellung des Katalysators

### Herstellung der Kobaltkomponente:

Eine wässrige Lösung von Kobaltacetat wurde mit einem Überschuß an Natronlauge versetzt. Der resultierende Niederschlag wurde abfiltriert, gewaschen und getrocknet. Nach Aufmahlen des Trockengutes erfolge eine Verschlickerung desslben unter Zugabe entsprechender Hilfsstoffe (Verflüssiger, Stabilisatoren). Die Sprühgranulierung des Schlickers lieferte ein Granulat mit einer mittleren Korngröße von 50 µm und einer Schüttdichte von 0,9 g/cm³.

### Herstellung der Magnesiumkomponente:

Magnesiumcarbonat wurde durch mehrstündiges Kalzinieren in Magnesiumoxid überführt und anschließend unter Zusatz entsprechender Hilfsstoffe (Verflüssiger, Stabilisatoren) verschlickert. Die Sprühgranulierung des Schlickers lieferte ein Granulat mit einer mittleren Korngröße von 3 µm und einer Schüttdichte von 0,6 g/cm³.

### Vermengen der Komponenten:

Die auf obige Weise hergestellten Ausgangskomponenten wurden unter Zusatz von Graphit trocken miteinander vermengt, in einem solchen Verhältnis, das nach der abschließenden Temperung ein Massenverhältnis der resultierenden Oxide von Co₃O₄/MgO = 3/7 erhalten wurde.

### Verpressen und Tempern des Gemenges:

Das Gemenge wurde anschließend auf einer automatischen Presse zu zylindrischen Formkörpern mit den Abmessungen d=3,5 mm und h= 2,6 mm verpresst.

Es folgte die abschließende Temperung der erhaltenen Formkörper an der Luft bei 600°C zum Abbrand der zugesetzten Hilfstoffe und zur Überführung der Kobaltkomponente in Co₃O₄.

Die erzielte Verdichtung (Raumdichte) betrug 1,4 g/cm³ bei einem Gesamtporenvolumen 390 cm³/g. Die radiale Druckfestigkeit der Katalysatorpartikel betrug 1,4 MPa.

Der Kobaltgehalt, ausgedrückt in Massenprozent bezogen auf die Gesamtmasse an Katalysator betrug 21 %.

### Anwendung des Katalysators:

Das Probenmaterial zur Durchführung der Messung im Laborreaktor wurde durch Zerkleinern der gemäß obiger Herstellung erhaltenen Katalysatorkörper gewonnen. Das Material wurde anschließend in einen beheizbaren Durchflußreaktor aus Kieselglas eingebracht und mit einem Abgas beaufschlagt, dessen Zusammensetzung typisch ist für ein Abgas der Salpetersäureproduktion nach Reduktion des NOx-Gehaltes. Das Abgas hatte dabei folgende Zusammensetzung: 2000 vppm N₂O, 2,5% Vol.% O₂, 0,5 Vol.% H₂O, Rest N₂.

Der Gehalt an N₂O wurde am Reaktoreingang und -ausgang mit Hilfe eines FTIR-Spektrometers mit Langwegküvette gemessen.

Die Raumgeschwindigkeit betrug 10.000 h⁻¹, bezogen auf ein Schüttvolumen des Katalysators von 16 cm³.

Unter diesen Bedingungen wurde bei 300°C ein 55%iger Abbau des N₂O erreicht. Bei 400°C wurden >99% des in den Reaktor eintretenden N₂O zu N₂ und O₂ abgebaut.

## Patentansprüche

1. Verfahren zum Abbau von N₂O bei der Salpetersäureproduktion durch Kontaktieren des den Absorptionsturm verlassenden N₂O-haltigen Abgases mit einem Katalysator, der mindestens eine oxidische Kobaltverbindung und mindestens eine oxidische Magnesiumverbindung enthält unter solchen Bedingungen, die eine Umwandlung von N₂O zu gasförmigen Stickstoff und Sauerstoff erlauben, wobei der Gehalt an oxidischen Kobaltverbindungen im Bereich von 0,1 bis 50 Gew.% und der Gehalt an oxidischen Magnesiumverbindungen im Bereich von 50 bis 99,9 Gew.%, jeweils bezogen auf die Gesamtmasse des Katalysators, liegt und wobei mindestens 30 % der im Katalysator enthaltenen Co-Atome in chemisch dreiwertigem Zustand vorliegen.

2. Verfahren nach Anspruch 1, **dadurch gekennzeichnet, daß** mindestens eine der im Katalysator enthaltenen Kobaltverbindungen Perowskit- oder Spinellstruktur hat.

3. Verfahren nach Anspruch 1, **dadurch gekennzeichnet, daß** das Überleiten des Gases über den Katalysator bei einer Raumgeschwindigkeit von 2000 h⁻¹ bis 200 000 h⁻¹ erfolgt.

4. Verfahren nach Anspruch 1, **dadurch gekennzeichnet, daß** der Druck beim Überleiten des Gases über den Katalysator im Bereich von 4 bis 12 bara liegt.

5. Verfahren nach Anspruch 1, **dadurch gekennzeichnet, daß** der Katalysator in einem Reaktor im Abgasstrom in Prozeßrichtung vor der Expansionsturbine angeordnet ist.

6. Verfahren nach Anspruch 5, **dadurch gekennzeichnet, daß** der Katalysator vor der Expansionsturbine und hinter einer DeNOx-Stufe angeordnet ist.

7. Verfahren nach Anspruch 1, **dadurch gekennzeichnet, daß** das N₂O-haltige Gas bei Temperaturen im Bereich von 250 bis 650°C über den Katalysator geleitet wird.

8. Verfahren nach Anspruch 1, **dadurch gekennzeichnet, daß** zur Einstellung der Betriebstemperatur des Reaktors die Reaktionswärme der NH₃-Oxidation genutzt wird durch Wärmetausch des in den Reaktor eintretenden Abgasstroms mit den heißen Prozeßgasen der NH₃-Oxidation.

9. Verfahren nach Anspruch 1, **dadurch gekennzeichnet, daß** ein Abbau von N₂O zu N₂ und O₂ zu mindestens 80% erreicht wird.

10. Katalysator zum Abbau von N₂O bestehend im wesentlichen aus mindestens einer oxidischen Magnesiumverbindung und mindestens einer oxidischen Kobaltverbindung, wobei der Gehalt an oxidischen Kobaltverbindungen im Bereich von 0,1 bis 50 Gew.%, und der Gehalt an oxidischen Magnesiumverbindungen im Bereich von 50 bis 99,9 Gew.%, jeweils bezogen auf die Gesamtmasse des Katalysators, liegt, und mindestens 30 % der im Katalysator enthaltenen Co-Atome in chemisch dreiwertigem Zustand vorliegen.

11. Katalysator nach Anspruch 10, **dadurch gekennzeichnet, daß** der Katalysator eine Raumdichte im Bereich von 0,5 bis 2,5 g/cm³ bezogen auf den einzelnen Katalysatorkörper aufweist.

12. Katalysator nach Anspruch 10, **dadurch gekennzeichnet, daß** die oxidischen Kobaltverbindungen und die oxidischen Magnesiumverbindungen in getrennten Phasen vorliegen.

13. Katalysator nach Anspruch 10, **dadurch gekennzeichnet, daß** das Porenvolumen des Katalysators im Bereich von 0,1 bis 0,8 ml/g, liegt.

14. Katalysator nach Anspruch 10, **dadurch gekennzeichnet, daß** mindestens 50% der im Katalysator enthaltenen Co-Atome in chemisch III-wertigem Zustand vorliegen.

15. Katalysator nach Anspruch 10, **dadurch gekennzeichnet, daß** mindestens eine der im Katalysator enthaltenen Kobaltverbindungen Perowskit- oder Spinellstruktur hat.

16. Katalysator nach Anspruch 10, **dadurch gekennzeichnet, daß** der Katalysator eine spezifische Oberfläche im Bereich von 5 bis 150 m²/g aufweist.

17. Katalysator nach Anspruch 10, **dadurch gekennzeichnet, daß** der Katalysator, ein zylindrischer Formkörper ist und eine radiale Druckfestigkeit im Bereich von 0,5 bis 10 MPa aufweist.

18. Verfahren zur Herstellung eines Katalysators bestehend im wesentlichen aus mindestens einer oxidischen Magnesiumverbindung und mindestens einer oxidischen Kobaltverbindung, wobei der Gehalt an oxidischen Kobaltverbindungen im Bereich von 0,1 bis 50 Gew.%, und der Gehalt an oxidischen Magnesiumverbindungen im Bereich von 50 bis 99,9 Gew.%, jeweils bezogen auf die Gesamtmasse des Katalysators, liegt, und mindestens 30 % der im Katalysator enthaltenen Co-Atome in chemisch dreiwertigem Zustand vorliegen, wobei oxidische Kobaltverbindungen und oxidische Magnesiumverbindungen oder entsprechende Precusoren, die durch Temperung in die oxidischen Verbindungen übergehen, trocken miteinander zu einem rieselfähigen Gemenge vermischt werden und das rieselfähige Gemenge unter Ausschluß von Wasser zu einem Formkörper verdichtet wird, bis die gewünschte Raumdichte erreicht worden ist.

19. Verfahren zur Herstellung eines Katalysators gemäß Anspruch 18, **dadurch gekennzeichnet, daß** die oxidischen Magnesiumverbindungen und/oder die oxidischen Cobaltverbindungen und/oder die entsprechenden Precursoren, die durch Temperung in die oxidischen Verbindungen übergehen, vor dem trockenen Verdichten durch getrennte Verschlickerung und getrennte Sprühgranulierung in rieselfähige Pulver übergeführt werden, die sich zur automatischen Befüllung des Verdichtungsaggregates eignen.

20. Verfahren zur Herstellung eines Katalysators gemäß Anspruch 18, **dadurch gekennzeichnet, daß** die erhaltenen Formkörper bei Temperaturen im Bereich von 200 bis 700°C getempert werden.

## Claims

1. Process for decomposing N₂O during nitric acid production by bringing the N₂O-containing waste gas leaving the absorption column into contact with a catalyst which comprises at least one oxidic cobalt compound and at least one oxidic magnesium compound, under conditions which permit conversion of N₂O to gaseous nitrogen and oxygen, the content of oxidic cobalt compounds being in the range from 0.1 to 50% by weight and the content of oxidic magnesium compounds being in the range from 50 to 99.9% by weight, based in each case on the total weight of the catalyst, and at least 30% of the Co atoms present in the catalyst being present in the trivalent state.

2. Process according to Claim 1, **characterized in that** at least one of the cobalt compounds present in the catalyst has perowskit or spinel structure.

3. Process according to Claim 1, **characterized in that** the space velocity for the passage of the gas over the catalyst is from 2000 h⁻¹ to 200 000 h⁻¹.

4. Process according to Claim 1, **characterized in that** the pressure during passage of the gas over the catalyst is in the range from 4 to 12 bara.

5. Process according to Claim 1, **characterized in that** the catalyst has been arranged in a reactor in the waste gas stream upstream of the expansion turbine in the direction of the process.

6. Process according to Claim 5, **characterized in that** the catalyst has been arranged upstream of the expansion turbine and downstream of a DeNOₓ stage.

7. Process according to Claim 1, **characterized in that** the N₂O-containing gas is passed at temperatures in the range from 250 to 650°C over the catalyst.

8. Process according to Claim 1, **characterized in that** the heat of reaction of the NH₃ oxidation is used to set the operating temperature of the reactor, via heat exchange between the waste gas stream entering into the reactor and the hot process gases from the NH₃ oxidation.

9. Process according to Claim 1, **characterized in that** at least 80% decomposition of N₂O to give N₂ and O₂ is achieved.

10. Catalyst for the decomposition of N₂O consisting essentially of at least one oxidic magnesium compound and at least one oxidic cobalt compound, the content of oxidic cobalt compounds being in the range from 0.1 to 50% by weight and the content of oxidic magnesium compounds being in the range from 50 to 99.9% by weight, based in each case on the total weight of the catalyst, and at least 30% of the Co atoms present in the catalyst being present in the trivalent state.

11. Catalyst according to Claim 10, **characterized in that** the envelope density of the catalyst is 0.5 to 2.5 g/cm³, based on the individual catalyst body.

12. Catalyst according to Claim 10, **characterized in that** the oxidic cobalt compounds and the oxidic magnesium compounds are present in separate phases.

13. Catalyst according to Claim 10, **characterized in that** the pore volume of the catalyst is in the range from 0.1 to 0.8 ml/g.

14. Catalyst according to Claim 10, **characterized in that** at least 50% of the Co atoms present in the catalyst are present in the trivalent state.

15. Catalyst according to Claim 10, **characterized in that** at least one of the cobalt compounds present in the catalyst has perowskit or spinel structure.

16. Catalyst according to Claim 10, **characterized in that** the catalyst has a specific surface area in the range from 5 to 150 m²/g.

17. Catalyst according to Claim 10, **characterized in that** the catalyst is a cylindrical moulding and has a radial compressive strength in the range from 0.5 to 10 MPa.

18. A process for preparing a catalyst consisting essentially of at least one oxidic magnesium compound and at least one oxidic cobalt compound, the content of oxidic cobalt compounds being in the range from 0.1 to 50% by weight and the content of oxidic magnesium compounds being in the range from 50 to 99.9% by weight, based in each case on the total weight of the catalyst, and at least 30% of the Co atoms present in the catalyst being in the trivalent state, where oxidic cobalt compounds and oxidic magnesium compounds or appropriate precursors which are converted into the oxidic compounds by heat treatment are mixed dry with one another to give a flowable mix, and the flowable mix is compacted, with exclusion of water, to give a moulding, until the desired envelope density has been achieved.

19. Process for preparing a catalyst according to Claim 18, **characterized in that** the oxidic magnesium compounds and/or the oxidic cobalt compounds and/or the appropriate precursors which are converted into the oxidic compounds by heat treatment are transformed into flowable powders prior to the dry compaction via separate slurrying and separate spray granulation, the powders being suitable for automatic charging of the compaction assembly.

20. Process for preparing a catalyst according to Claim 18, **characterized in that** the resultant mouldings are heat-treated at temperatures in the range from 200 to 700°C.

## Revendications

1. Procédé de dégradation du N₂O lors de la production de l'acide sulfurique par mise en contact de l'effluent gazeux contenant du N₂O et devant s'échapper de la tour d'absorption avec un catalyseur qui contient au moins un composé oxyde du cobalt et au moins un composé oxyde du magnésium, dans des conditions permettant une conversion du N₂O en azote et oxygène gazeux, la teneur en les composés oxydes du cobalt étant comprise dans la plage de 0,1 à 50 % en poids et la teneur en les composés oxydes du magnésium étant comprise dans la plage de 50 à 99,9 % en poids, dans tous les cas par rapport au poids total du catalyseur, au moins 30 % des atomes de Co contenus dans le catalyseur se présentant dans un état chimiquement trivalent.

2. Procédé selon la revendication 1, **caractérisé en ce qu'**au moins l'un des composés du cobalt contenu dans le catalyseur a une structure de pérovskite ou de spinelle.

3. Procédé selon la revendication 1, **caractérisé en ce que** le passage du gaz sur le catalyseur s'effectue à une vitesse spatiale de 2000 à 200 000 h⁻¹.

4. Procédé selon la revendication 1, **caractérisé en ce que** la pression absolue, lors du passage du gaz sur le catalyseur, est comprise dans la plage de 4 à 12 bar.

5. Procédé selon la revendication 1, **caractérisé en ce que** le catalyseur est disposé dans un réacteur dans le courant d'effluent gazeux, dans la direction du procédé, en amont de la turbine d'expansion.

6. Procédé selon la revendication 5, **caractérisé en ce que** le catalyseur est disposé en avant de la turbine d'expansion et en arrière d'un étage de DeNOx.

7. Procédé selon la revendication 1, **caractérisé en ce que** le gaz contenant du N₂O est envoyé sur le catalyseur à des températures comprises dans la plage de 250 à 650°C.

8. Procédé selon la revendication 1, **caractérisé en ce que**, pour ajuster la température de marche du réacteur, on utilise la chaleur de réaction de l'oxydation du NH₃ par échange de chaleur du courant d'effluent gazeux pénétrant dans le réacteur avec les gaz de procédé chauds de l'oxydation du NH₃.

9. Procédé selon la revendication 1, **caractérisé en ce qu'**on arrive à un taux de dégradation du N₂O en N₂ et O₂ d'au moins 80 %.

10. Catalyseur de dégradation du N₂O, constitué pour l'essentiel d'au moins un composé oxyde du magnésium et d'au moins un composé oxyde du cobalt, la teneur en les composés oxydes du cobalt étant comprise dans la plage de 0,1 à 50 % en poids, et la teneur en les composés oxydes du magnésium étant comprise dans la plage de 50 à 99,9 % en poids, dans tous les cas par rapport au poids total du catalyseur, au moins 30 % des atomes de Co contenus dans le catalyseur se présentant dans un état chimiquement trivalent.

11. Catalyseur selon la revendication 10, **caractérisé en ce que** le catalyseur a une masse volumique comprise dans la plage de 0,5 à 2, 5 g/cm³, rapportée aux éléments catalyseurs individuels.

12. Catalyseur selon la revendication 10, **caractérisé en ce que** les composés oxydes du cobalt et les composés oxydes du magnésium sont présents dans des phases distinctes.

13. Catalyseur selon la revendication 10, **caractérisé en ce que** le volume des pores du catalyseur est compris dans la plage de 0,1 à 0,8 ml/g.

14. Catalyseur selon la revendication 10, **caractérisé en ce qu'**au moins 50 % des atomes de Co contenus dans le catalyseur se présentent dans un état chimiquement trivalent.

15. Catalyseur selon la revendication 10, **caractérisé en ce qu'**au moins l'un des composés du cobalt contenu dans le catalyseur a une structure de pérovskite ou de spinelle.

16. Catalyseur selon la revendication 10, **caractérisé en ce que** le catalyseur présente une aire spécifique comprise dans la plage de 5 à 150 m²/g.

17. Catalyseur selon la revendication 10, **caractérisé en ce que** le catalyseur est un objet façonné cylindrique et présente une résistance à la compression radiale comprise dans la plage de 0,5 à 10 MPa.

18. Procédé de préparation d'un catalyseur constitué pour l'essentiel d'au moins un composé oxyde du magnésium et d'au moins un composé oxyde du cobalt, la teneur en les composés oxydes du cobalt étant comprise dans la plage de 0,1 à 50 % en poids, et la teneur en les composés oxydes du magnésium étant comprise dans la plage de 50 à 99,9 % en poids, dans tous les cas par rapport au poids total du catalyseur, et au moins 30 % des atomes de Co contenus dans le catalyseur se présentent dans un état chimiquement trivalent, ce à l'occasion de quoi les composés oxydes du cobalt et les composés oxydes du magnésium ou les précurseurs correspondants, qui par un recuit sont convertis en les composés oxydes, sont mélangés à sec les uns avec les autres pour donner une masse à écoulement libre, et la masse à écoulement libre est compactée, à l'abri de l'eau, pour donner un objet façonné, jusqu'à arriver à la masse volumique souhaitée.

19. Procédé de préparation d'un catalyseur selon la revendication 18, **caractérisé en ce que** les composés oxydes du magnésium et/ou les composés oxydes du cobalt et/ou les précurseurs correspondants, qui par recuit sont convertis en les composés oxydes, sont, avant le compactage à sec, convertis, par une opération distincte de préparation d'une barbotine et une opération distincte de granulation par atomisation, convertis en des poudres à écoulement libre, qui conviennent au chargement automatique de l'équipement de compactage.

20. Procédé de préparation d'un catalyseur selon la revendication 18, **caractérisé en ce que** les objets façonnés obtenus sont recuits à des températures comprises dans la plage de 200 à 700°C.
